# EUROPÄISCHE PATENTSCHRIFT

(11) **EP 1 052 079 B1**
(45) Veröffentlichungstag und Bekanntmachung des Hinweises auf die Patenterteilung: **13.06.2007**
(21) Anmeldenummer: 00108492.0
(22) Anmeldetag: 19.04.2000
(51) Int. Cl.: B29C 47/20, B29C 47/90

(54) **Verfahren und Vorrichtung zum Herstellen eines Hohlkammerprofils aus thermoplastischem Kunststoff nach dem Kühldüsenverfahren**
Method and apparatus for manufacturing hollow profile of thermoplastic material
Procédé et dispositif de fabrication d'un élément profilé creux en matière thermoplastique

(30) Priorität: 08.05.1999 DE 19921458
(43) Veröffentlichungstag der Anmeldung: 15.11.2000
(73) Patentinhaber: Technoform Caprano und Brunnhofer GmbH & Co. KG, 34119 Kassel (DE)
(72) Erfinder: Brunnhofer, Erwin, 34277 Fuldabrück (DE)
(74) Vertreter: Rohmann, Michael

(56) Entgegenhaltungen:
- EP-A- 0 698 471
- WO-A-96/30188
- US-A- 5 783 286
- PATENT ABSTRACTS OF JAPAN vol. 005, no. 068 (M-067), 8. Mai 1981 (1981-05-08) & JP 56 019732 A (ARON KASEI CO LTD), 24. Februar 1981 (1981-02-24)

## Beschreibung

Die Erfindung betrifft einerseits ein Verfahren zum Herstellen eines über seine Länge konstanten Querschnitt aufweisenden Hohlkammerprofils aus thermoplastischem Kunststoff nach dem Kühldüsenverfahren, wobei eine Schmelze des Kunststoffes durch eine beheizte Profilwerkzeugzone und unmittelbar anschließend noch unter Preßdruck durch eine gekühlte Kalibrierzone mit Innen- und Außenkühlung des Hohlkammerprofils stranggepreßt wird, und andererseits eine Vorrichtung zur Durchführung eines solchen Verfahrens, mit einem beheizbaren Profilwerkzeug und einem kühlbaren Kalibrierwerkzeug mit einer kühlbaren Hohlkammerdornanordnung, wobei das Profilwerkzeug und das Kalibrierwerkzeug unter Zwischenschaltung einer Isolierschicht zu einem geschlossenen System mit sich fortpflanzendem Schmelzedruck vereinigt sind.

Im Rahmen von bekannten Maßnahmen der genannten Art (WO 96/30188) tritt die Kunststoffschmelze mit bereits endgültiger Hohlkammerprofilgestalt aus dem Profilwerkzeug aus bzw. in das Kalibrierwerkzeug über. Die temperierbare, d. h. entweder heiz- oder kühlbare Hohlkammerdornanordnung ist im Profilwerkzeug gehaltert und reicht in das Kalibrierwerkzeug hinein. Soll das Hohlkammerprofil hierbei mit geringen Toleranzen gefertigt werden, ist man gezwungen, mit verhältnismäßig niedriger Strangpreßgeschwindigkeit zu arbeiten. Das gilt insbesondere dann, wenn die Hohlkammerprofile stark voneinander abweichende Wanddickenbereiche aufweisen.

Der Erfindung liegt das technische Problem zugrunde, komplizierte Hohlkammerprofile mit großer Genauigkeit in hoher Geschwindigkeit herzustellen.

Die Erfindung löst diese Aufgabe in verfahrensmäßiger Hinsicht dadurch, daß die Kunststoffschmelze in Form voneinander unabhängigen offenen Teilprofilen, die entsprechend ihrer Lage im Hohlkammerprofil angeordnet sind und zwischen zugeordneten Teilstegenden noch fehlende Stegteile aufweisen, aus der Profilwerkzeugzone austritt und die noch fehlenden Stegteile in der Kalibrierzone durch unter dem Preßdruck nachfließende Kunststoffschmelze ergänzt sowie noch aus der Schmelzehitze heraus mit den zugeordneten Teilstegenden stoffschlüssig verbunden werden.

Nach bevorzugter Ausführungsform wird man zumindest die im Bereich der Teilstegenden befindliche Kunststoffschmelze über eine Anfangsteillänge der Kalibrierzone warmhalten, um die stoffschlüssige Verbindung bzw. Verschweißung der Teilstegenden mit der nachgeflossenen Kunststoffschmelze unter allen Umständen sicherzustellen. Darüber hinaus empfiehlt es sich, die Innenkühlung des Hohlkammerprofils erst in der Kalibrierzone und nicht wie bei den eingangs erwähnten bekannten Maßnahmen schon in der Profilwerkzeugzone einsetzen zu lassen.

Die Erfindung geht von der Erkenntnis aus, daß die Probleme um die Strangpreßgeschwindigkeit umgangen werden können, indem das Hohlkammerprofil unvollständig in offenen Teilprofilen in der Profilwerkzeugzone erzeugt wird und diese Teilprofile erst in der Kalibrierzone durch unter Preßdruck nachfließende Kunststoffschmelze zum Hohlkammerprofil ergänzt werden.

Im Stand der Technik ist es zwar auch schon bekannt (EP 0 584 467 B1), ein Kunststoffhohlkammerprofil dadurch herzustellen, daß offene Teilprofile mit Abstand voneinander stranggepreßt und nach Kalibrierung z. B. nach erneuter Erwärmung zum endgültigen Hohlkammerprofil zusammengeführt werden. Die Summe der Teilprofile ergibt hier aber bereits das endgültige Hohlkammerprofil und die Teilprofile müssen nach erneuter Erwärmung zusammengeführt werden. Beim erfindungsgemäßen Verfahren wird dieses bekannte Verfahren teilweise ebenfalls genutzt, abgesehen von den zuvor schon aufgeführten Unterschieden, ist aber die Zusammenfügung der Teilprofile in die Kalibrierzone gleichsam zurückverlegt.

Wie eingangs schon ausgeführt worden ist, ist Gegenstand der Erfindung auch eine Vorrichtung des beschriebenen Verfahrens. Hier besteht die Lösung des zugrundeliegenden Problems darin, daß das Profilwerkzeug an seiner dem Kalibrierwerkzeug zugewandten Stirnseite mit Abstand voneinander angeordnete Austritte von Teilprofilkanälen aufweist und die Teilprofilkanäle im Kalibrierwerkzeug in einen bis zum Ende des Kalibrierwerkzeuges geführten Hohlkammerprofilkanal übergehen. Da bei der erfindungsgemäßen Vorrichtung das Profilwerkzeug nur Teilprofilkanäle für offene Teilprofile aufweist, ist die Hohlkammerdornanordnung nur im Kalibrierwerkzeug vorhanden.

Für die weitere Ausgestaltung bestehen auch für die Vorrichtung mehrere Möglichkeiten. So ist die Anordnung vorzugsweise so getroffen; daß zumindest ein Zuführungskanal für die Kunststoffschmelze im Profilwerkzeug in die Teilprofilkanäle verzweigt, selbstverständlich kann aber auch jeder Teilprofilkanal von einem eigenen Zuführkanal des Profilwerkzeuges versorgt werden. Von besonderer Bedeutung ist die Ausgestaltung, bei der neben den Enden der Teilprofilkanäle thermisch mit dem Profilwerkzeug verbundene Wärmeleitnasen in die Teilprofilkanäle des Kalibrierwerkzeuges hineinragen. In konstruktiver Hinsicht läßt sich das verhältnismäßig leicht umsetzen, indem einander zugeordnete Wärmeleitnasen jeweils an einem in das Profilwerkzeug eingesetzten Wärmeleiteinsatz vorgesehen sind. Insoweit ist es auch besonders günstig, wenn die beiden Wärmeleitnasen der Wärmeleiteinsätze zwischen sich eine Dornhalteanordnung aufnehmen, die z. B. brückenförmig aufgebaut sein kann.

Im folgenden wird die Erfindung anhand einer ein Ausführungsbeispiel darstellenden Zeichnung näher erläutert. Es zeigen teilweise schematisch und in unterschiedlichen Maßstäben
- Fig. 1: eine Perspektivansicht einer Vorrichtung zum Herstellen eines Hohlkammerprofils,

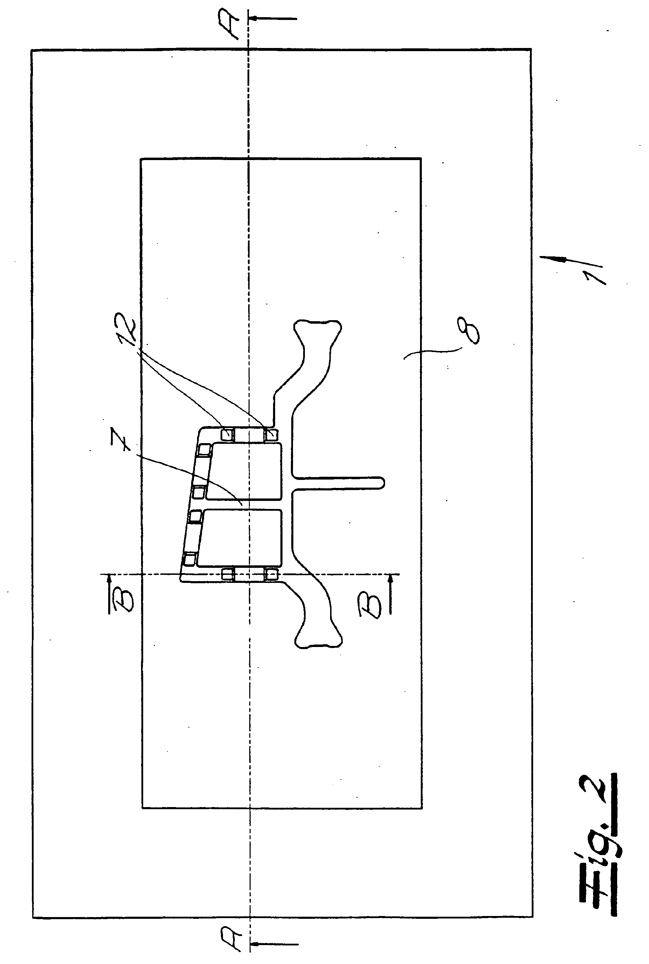

- Fig. 2: eine Ansicht der Austrittsfläche des Profilwerkzeuges der Vorrichtung gemäß Fig. 1,
- Fig. 3: eine perspektivische Ansicht der Austrittsfläche des Profilwerkzeuges bei entferntem Kalibrierwerkzeug,

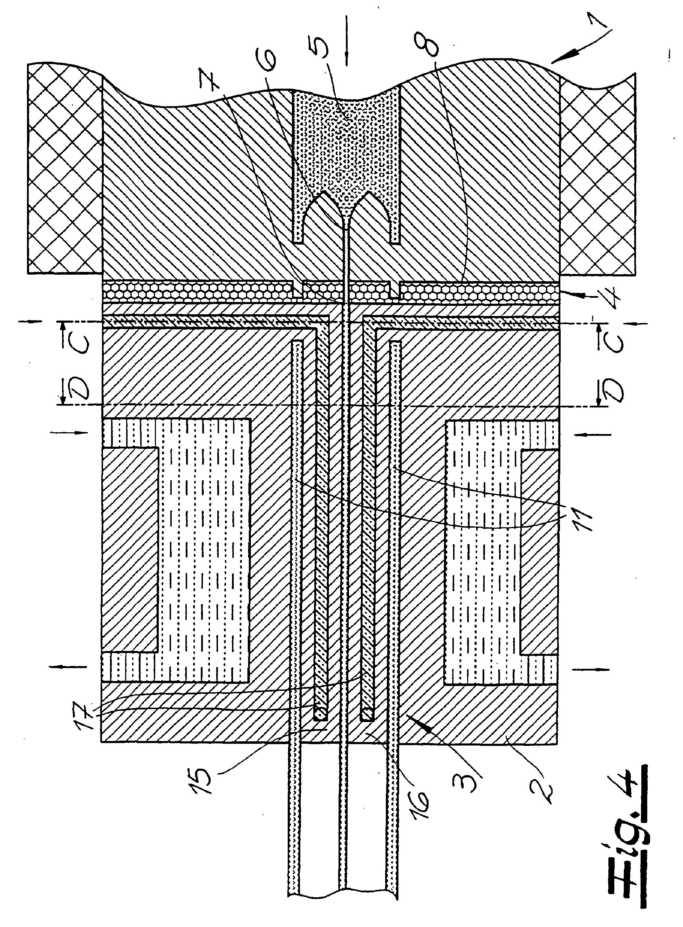

- Fig. 4: einen Schnitt A-A durch den Gegenstand der Fig. 1 und 2
- Fig. 5: einen Schnitt B-B durch den Gegenstand der Fig. 1 und 2

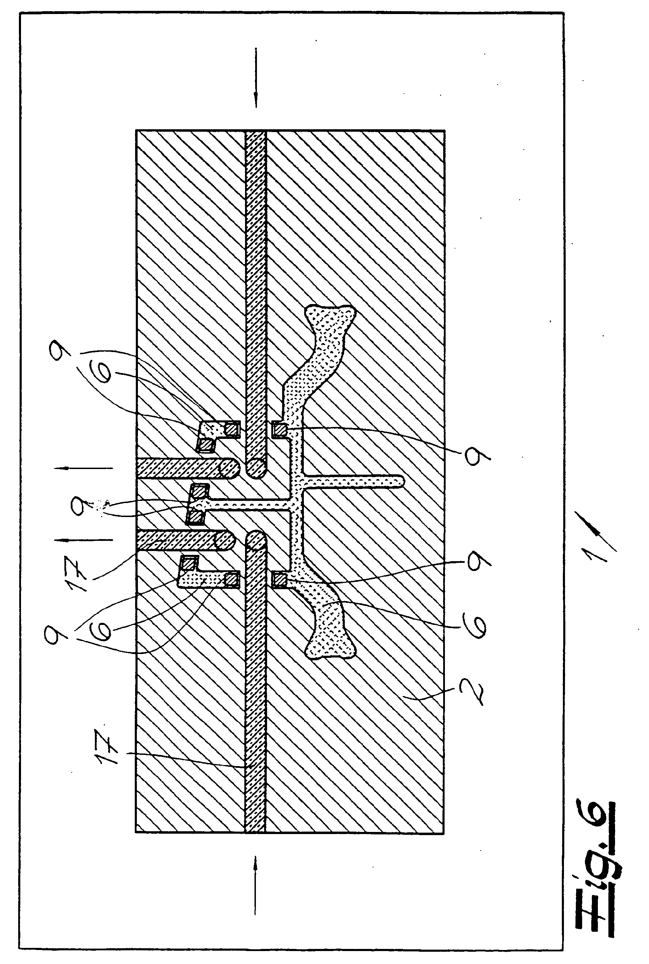

- Fig. 6: einen Schnitt C-C durch den Gegenstand der Fig. 4 und
- Fig. 7: einen Schnitt D-D durch den Gegenstand der Fig. 4.

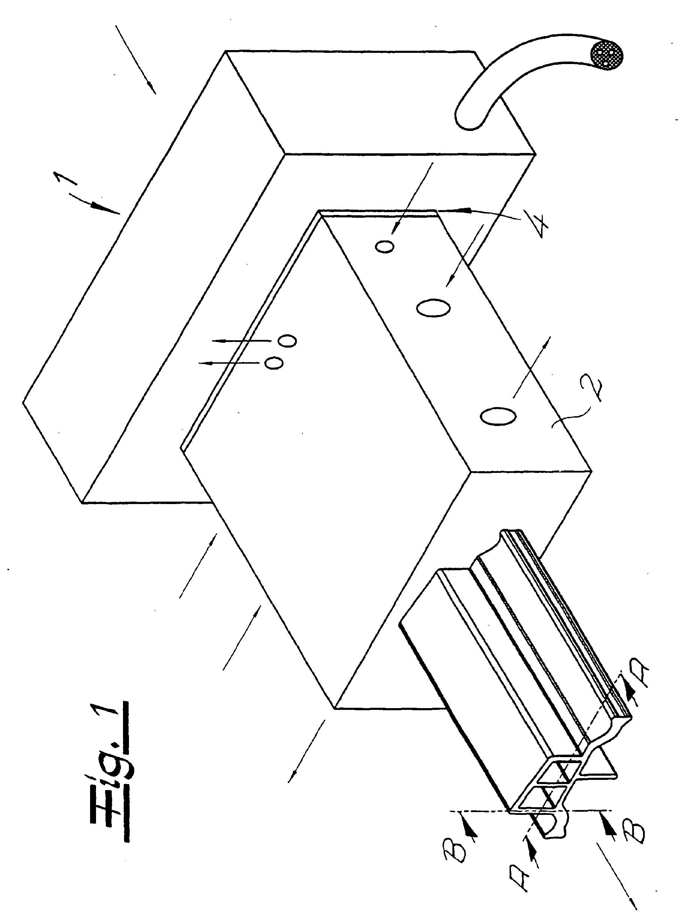

Die in den Figuren dargestellte Vorrichtung dient zum Herstellen eines über seine Länge konstanten Querschnitt aufweisenden Hohlkammerprofils aus thermoplastischem Kunststoff nach dem Kühldüsenverfahren. Die Querschnittsgestalt des Hohlkammerprofils entnimmt man insbesondere Fig. 1. In ihrem grundsätzlichen Aufbau besteht die Vorrichtung aus einem beheizbaren Profilwerkzeug 1 und einem kühlbaren Kalibrierwerkzeug 2 mit einer kühlbaren Hohlkammerdornanordnung 3. Das Profilwerkzeug 1 und das Kalibrierwerkzeug 2 sind unter Zwischenschaltung einer Isolierschicht 4, die auch aus einer dünnen Luftschicht bestehen könnte, zu einem im einzelnen nicht dargestellten geschlossenen System mit sich fortpflanzendem Schmelzedruck vereinigt.

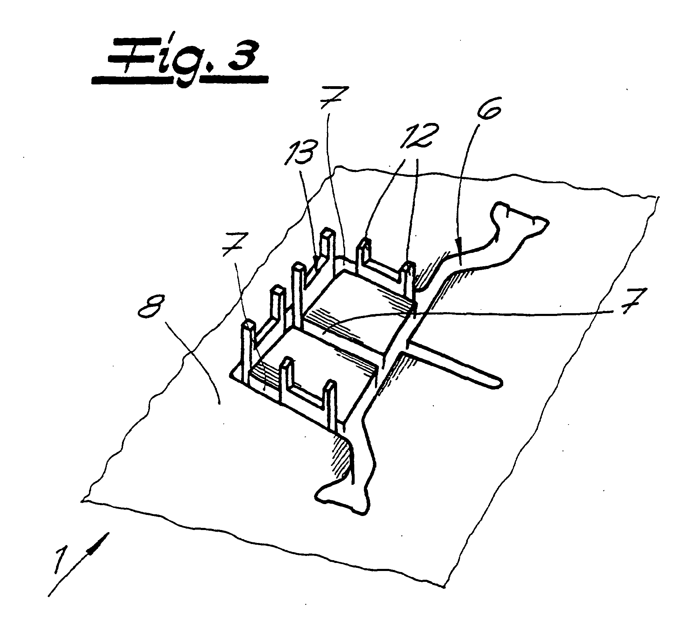

Das Profilwerkzeug 1 ist auf seiner dem Kalibrierwerkzeug 2 abgewandten Seite mit Zuführungskanälen 5 für die thermoplastifizierte Kunststoffschmelze versehen, die in Teilprofilkanäle 6 für offene Teilprofile verzweigt sind. Wie man Fig. 3 entnimmt, münden diese Teilprofilkanäle 6 mit Abstand voneinander in Austritten 7 in der dem Kalibrierwerkzeug zugewandten Stirnfläche 8. Aus den Austritten 7 treten mithin voneinander unabhängige offene Teilprofile aus; diese sind entsprechend ihrer Lage im fertigen Hohlkammerprofil angeordnet und weisen zwischen zugeordneten Teilstegenden 9 noch fehlende Stegteile 10 auf.

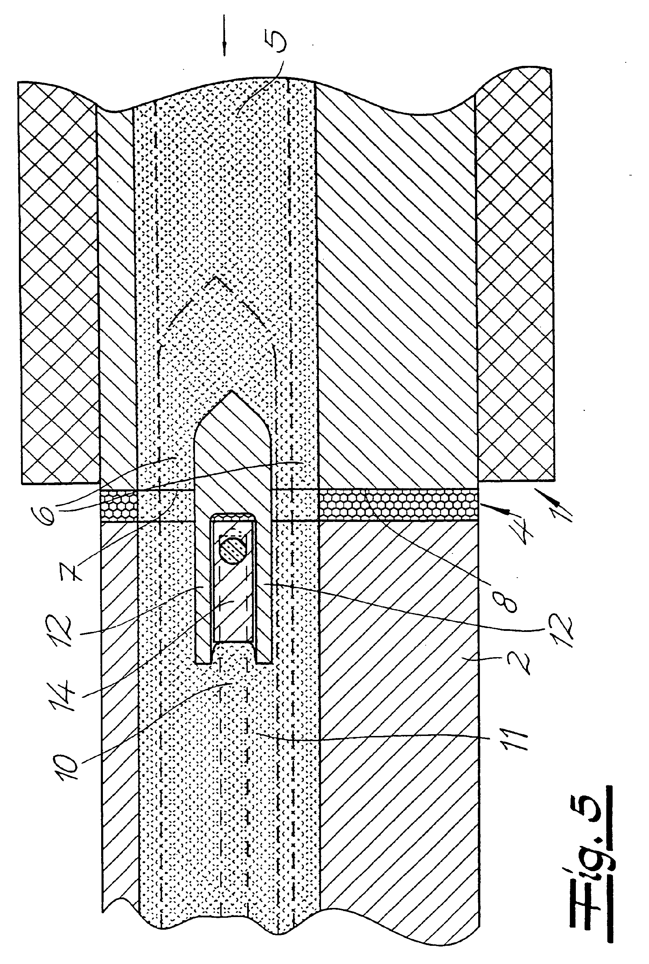

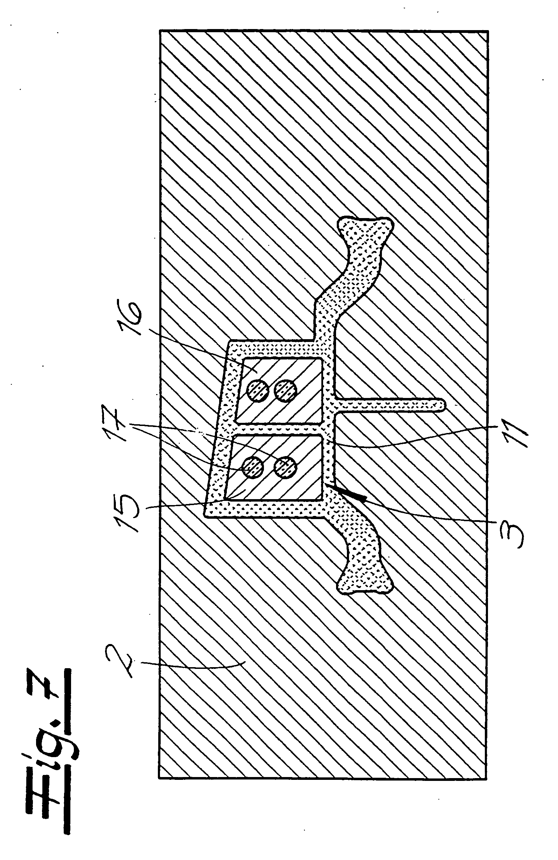

Im Kalibrierwerkzeug 2 gehen die Teilprofilkanäle 6 in einen bis zum Ende des Kalibrierwerkzeuges 2 geführten Hohlkammerprofilkanal 11 über (vgl. Fig. 5, 7) . Im Übergangsbereich werden die noch fehlenden Stegteile 10 durch unter dem Preßdruck nachfließende Kunststoffschmelze ergänzt sowie noch aus der Schmelzhitze heraus mit den zugeordneten Teilstegenden 9 stoffschlüssig verbunden bzw. verschweißt.

Diese Ergänzung und Verschweißung wird dadurch begünstigt (vgl. Fig. 3, 5), daß neben den längsverlaufenden Enden der Teilprofilkanäle 6 thermisch mit dem Profilwerkzeug 1 verbundene Wärmeleitnasen 12 in die Teilprofilkanäle 6 des Kalibrierwerkzeuges 2 hineinragen. Diese Wärmeleitnasen 12 halten zumindest die Teilstegenden 9 warm und fördern außerdem das Nachfließen der Kunststoffschmelze in den benachbarten Bereichen. Die genannten Wärmeleitnasen 12 sind jeweils paarweise an einem in das Profilwerkzeug 1 eingesetzten Wärmeleiteinsatz 13 aus Kupfer vorgesehen.

Fig. 5 zeigt, wie eine Dornhalteeinrichtung 14 für die kühlbare Hohlkammerdornanordnung 3 ausgebildet ist. Die Dornhalteeinrichtung 14 mit der Hohlkammerdornanordnung 3, die hier aus zwei Dornen 15, 16 besteht, ist, mit dem Kalibrierwerkzeug 2 einteilig ausgeführt; mehrteilige Ausführung wäre ebenfalls möglich. Die Bohrungen 17 für das Kühlmittel zur Kühlung der Dorne 15, 16 sind lediglich angedeutet.

Die beschriebene Methode zur Herstellung von Hohlprofilen aus thermoplastischem Kunststoff umfaßt zunächst die bei Kühldüsen übliche Prozeßführung, bei der der Schmelzdruck, der sowohl in der Düse als auch in der Kalibrierung ansteht, durch Regelvorgänge - entweder des Extruders oder des Abzuges - konstant gehalten wird. Gleichzeitig ist dieses genannte Herstellverfahren aber auch dazu geeignet, treibmittelhaltige Schmelzen zu verarbeiten und dabei die für das Kühldüsenverfahren typische Druckregelung zu benutzen und/oder die Schaumdichte durch das Verhältnis von Extruderdrehzahl (Masseausstoß) und Abzugsgeschwindigkeit einzustellen.

## Patentansprüche

1. Verfahren zum Herstellen eines über seine Länge konstanten Querschnitt aufweisenden Hohlkammerprofils aus thermoplastischem Kunststoff nach dem Kühldüsenverfahren, wobei eine Schmelze des Kunststoffes durch eine beheizte Profilwerkzeugzone (1) und unmittelbar anschließend noch unter Preßdruck durch eine gekühlte Kalibrierzone (2) mit Innen- und Außenkühlung des Hohlkammerprofils stranggepreßt wird, **dadurch gekennzeichnet, daß** die Kunststoffschmelze in Form von voneinander unabhängigen offenen Teilprofilen, die entsprechend ihrer Lage im Hohlkammerprofil angeordnet sind und zwischen zugeordneten Teilstegenden (9) noch fehlende Stegteile (10) aufweisen, aus der Profilwerkzeugzone (1) austritt und die noch fehlenden Stegteile in der Kalibrierzone (2) durch unter dem Preßdruck nachfließende Kunststoffschmelze ergänzt sowie noch aus der Schmelzhitze heraus mit den zugeordneten Teilstegenden stoffschlüssig verbunden werden.

2. Verfahren nach Anspruch 1, **dadurch gekennzeichnet, daß** zumindest die im Bereich der Teilstegenden befindliche Kunststoffschmelze über eine Anfangsteillänge der Kalibrierzone warm gehalten wird.

3. Verfahren nach Anspruch 1 oder 2, **dadurch gekennzeichnet, daß** die Innenkühlung des Hohlkammerprofils erst in der Kalibrierzone einsetzt.

4. Vorrichtung zur Durchführung des Verfahrens nach einem der Ansprüche 1 bis 3, mit einem beheizbaren Profilwerkzeug (1) und einem kühlbaren Kalibrierwerkzeug (2) mit einer kühlbaren Hohlkammerdornanordnung, wobei das Profilwerkzeug und das Kalibrierwerkzeug unter Zwischenschaltung einer Isolierschicht (4) zu einem geschlossenen System mit sich fortpflanzendem Schmelzedruck vereinigt sind, **dadurch gekennzeichnet, daß** das Profilwerkzeug (1) an seiner dem Kalibrierwerkzeug (2) zugewandten Stirnseite mit Abstand voneinander angeordnete Austritte (7) von Teilprofilkanälen (6) aufweist und die Teilprofilkanäle (6) im Kalibrierwerkzeug (2) in einen bis zum Ende des Kalibrierwerkzeuges (2) geführten Hohlkammerprofilkanal (11) übergehen.

5. Vorrichtung nach Anspruch 4, **dadurch gekennzeichnet, daß** zumindest ein Zuführungskanal (5) für die Kunststoffschmelze im Profilwerkzeug (1) in die Teilprofilkanäle (6) verzweigt ist.

6. Vorrichtung nach Anspruch 4 oder 5, **dadurch gekennzeichnet, daß** neben den Enden der Teilprofilkanäle (6) thermisch mit dem Profilwerkzeug (1) verbundene Wärmeleitnasen (12) in die Teilprofilkanäle (6) des Kalibrierwerkzeuges (2) hineinragen.

7. Vorrichtung nach Anspruch 6, **dadurch gekennzeichnet, daß** einander zugeordnete Wärmeleitnasen (12) jeweils an einem in das Profilwerkzeug (1) eingesetzten Wärmeleiteinsatz (13) vorgesehen sind.

8. Vorrichtung nach Anspruch 7, **dadurch gekennzeichnet, daß** die bei den Wärmeleitnasen (12) der Wärmeleiteinsätze (13) zwischen sich eine Dornhalteanordnung (14) aufnehmen.

## Claims

1. Method for producing a hollow chamber profile from thermoplastic plastic using the cooling nozzle method, said hollow chamber profile having a constant cross section over its length, wherein a melt of the plastic is extruded through a heated profile tool zone (1) and immediately thereafter, still under a pressing pressure, through a cooled calibration zone (2) with internal and external cooling of the hollow chamber profile, **characterised in that** the plastic melt exits from the profile tool zone (1) in the form of independent open partial profiles which are arranged according to their position in the hollow chamber profile and still have missing web parts (10) between associated partial web ends (9), and the web parts which are still missing are added in the calibration zone (2) by plastic melt flowing in under the pressing pressure and are bonded to the associated partial web ends by the heat of the melt.

2. Method according to claim 1, **characterised in that** at least the plastic melt located in the region of the partial web ends is kept hot over an initial partial length of the calibration zone.

3. Method according to claim 1 or 2, **characterised in that** the internal cooling of the hollow chamber profile starts only in the calibration zone.

4. Device for carrying out the method according to one of claims 1 to 3, with a heatable profile tool (1) and a coolable calibration tool (2) comprising a coolable hollow chamber mandrel arrangement, wherein the profile tool and the calibration tool are combined with the interposition of an insulating layer (4) to form a closed system with a continuous melting pressure, **characterised in that** the profile tool (1) has outlets (7) of partial profile channels (6) arranged at a distance from one another on its end side facing towards the calibration tool (2), and the partial profile channels (6) in the calibration tool (2) merge into a hollow chamber profile channel (11) which extends to the end of the calibration tool (2).

5. Device according to claim 4, **characterised in that** at least one feed channel (5) for the plastic melt in the profile tool (1) is branched into the partial profile channels (6).

6. Device according to claim 4 or 5, **characterised in that**, next to the ends of the partial profile channels (6), heat-conducting protrusions (12) which are thermally joined to the profile tool (1) protrude into the partial profile channels (6) of the calibration tool (2).

7. Device according to claim 6, **characterised in that** associated heat-conducting protrusions (12) are provided in each case on a heat-conducting insert (13) which is inserted in the profile tool (1).

8. Device according to claim 7, **characterised in that** the heat-conducting protrusions (12) of the heat-conducting inserts (13) accommodate between them a mandrel-holding arrangement (14).

## Revendications

1. Procédé de fabrication du type par filières d'extrusion, d'un profilé à compartiment creux en matière thermoplastique, présentant une section transversale constante sur sa longueur, dans lequel une masse fondue de matière plastique est extrudée au travers d'une zone chauffée d'un outil de profilage (1) et directement à la suite, encore sous la pression de compression, au travers d'une zone de calibrage (2) refroidie, avec refroidissement intérieur et extérieur du profilé à compartiment creux, **caractérisé en ce que** la masse fondue de matière plastique sort de la zone de l'outil de profilage (1) en forme de profilés partiels ouverts indépendamment les uns des autres, disposés en fonction de leur position dans le profilé à compartiment creux et présentent, entre des extrémités de traverses partielles (9) associées, des parties de traverses (10) encore manquantes, et **en ce que** les parties de traverses encore manquantes sont complétées dans la zone de calibrage (2) par la fusion de matière plastique, qui continue à s'écouler sous la pression de compression, et sont encore assemblées par alliance de matière, à partir de la chaleur de fusion, avec les extrémités de traverses associées.

2. Procédé suivant la revendication 1, **caractérisé en ce qu'**au moins la masse fondue de matière plastique située dans la zone des extrémités de traverses partielles est maintenue en température sur une longueur partielle initiale de la zone de calibrage.

3. Procédé suivant l'une des revendications 1 et 2, **caractérisé en ce que** le refroidissement intérieur du profilé à compartiment creux n'est placé que dans la zone de calibrage.

4. Dispositif pour la mise en oeuvre du procédé suivant l'une des revendications 1 à 3, comprenant un outil de profilage (1) pouvant être chauffé et un outil de calibrage (2) pouvant être refroidi avec un agencement de poinçons à compartiment creux pouvant être refroidi, dispositif dans lequel l'outil de profilage et l'outil de calibrage sont réunis en un système fermé, avec intercalation d'une couche isolante (4), avec une pression de masse en fusion qui se propage, **caractérisé en ce que** l'outil de profilage (1) comporte, sur son côté frontal tourné vers l'outil de calibrage (2), des sorties (7) disposées à distance mutuelle de canaux de profilage partiels (6) et les canaux de profilage partiels (6) se prolongent, dans l'outil de calibrage (2), par un canal de profilage de compartiment creux (11) guidé jusqu'à l'extrémité de l'outil de calibrage (2).

5. Dispositif suivant la revendication 4, **caractérisé en ce qu'**au moins un canal d'alimentation (5) pour la masse en fusion de matière plastique est ramifié dans l'outil de profilage (1) en canaux de profilage partiels (6).

6. Dispositif suivant l'une des revendications 4 et 5, **caractérisé en ce que**, à côté des extrémités des canaux de profilage partiels (6), des taquets conducteurs de chaleur (12), en liaison thermique avec l'outil de profilage (1), pénètrent dans les canaux de profilage partiels (6) de l'outil de calibrage (2).

7. Dispositif suivant la revendication 6, **caractérisé en ce que** des taquets conducteurs de chaleur (12), mutuellement associés, sont respectivement agencés sur un insert conducteur de chaleur (13) mis en place dans l'outil de profilage (1).

8. Dispositif suivant la revendication 7, **caractérisé en ce que** les deux taquets conducteurs de chaleur (12) des inserts (13) reçoivent entre eux un agencement de porte-poinçons (14).
